# EUROPEAN PATENT SPECIFICATION

(11) **EP 3 403 350 B1**
(45) Date of publication and mention of the grant of the patent: **13.05.2020**
(21) Application number: 16725719.5
(22) Date of filing: 17.05.2016
(51) Int. Cl.: H04L 1/18

(54) **ACKNOWLEDGEMENT (ACK) TRANSMISSIONS USING A SELF-CONTAINED SUBFRAME STRUCTURE**
ACKNOWLEDGEMENT (ACK)-ÜBERTRAGUNG MITHILFE EINER EIGENSTÄNDIGEN HILFSRAHMENSTRUKTUR
TRANSMISSIONS D'ACCUSÉ DE RÉCEPTION (ACK) AU MOYEN D'UNE STRUCTURE DE SOUS-TRAME AUTONOME

(30) Priority: 15.01.2016 US 201662279548 P
(43) Date of publication of application: 21.11.2018
(73) Proprietor: Intel IP Corporation, Santa Clara, CA 95054 (US)
(72) Inventor: XIONG, Gang, Portland, Oregon 97229 (US); NIMBALKER, Ajit, Santa Clara, California 95051 (US); BENDLIN, Ralf, Santa Clara, California 95054 (US); HE, Hong, Beijing 100190 (CN); CHO, Joonyoung, Santa Clara, California 95050 (US)
(74) Representative: Rooney, John-Paul
(86) International application number: PCT/US2016/032929
(87) International publication number: WO 2017/123275

(56) References cited:
- US-A1- 2009 276 676

## Description

### BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3GPP) long term evolution (LTE), the Institute of Electrical and Electronics Engineers (IEEE) 1202.16 standard (e.g., 1202.16e, 1202.16m), which is commonly known to industry groups as WiMAX (Worldwide interoperability for Microwave Access), and the IEEE 1202.11 standard, which is commonly known to industry groups as WiFi.

In 3GPP radio access network (RAN) LTE systems, the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

US 2009/0276676 A1 provides an apparatus and a method for controlling a Hybrid Automatic Repeat reQuest (HARQ) operation in a transmitter of a wireless mobile communication system using each frame constituted by a plurality of subframes. In the method for controlling an HARQ operation, indication information indicating a subframe position where transmission of a data burst starts and the number of subframes required for transmission of the data burst is transmitted to a receiver through an i-th frame. When the number of subframes does not exceed a threshold, it is determined that the data burst at the subframe position indicated by indication information of an (i+1)-th frame is retransmitted to the receiver. When the number of subframes exceeds the threshold, it is determined that the data burst at the subframe position indicated by indication information of an (i+n)-th frame, where n is a positive integer exceeding 1, is retransmitted to the receiver.

### SUMMARY

The invention is defined by the subject matter of the independent claims. Advantageous embodiments are subject to the dependent claims.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a self-contained hybrid automatic repeat request (HARQ) acknowledgement (ACK)-negative acknowledgement (NACK) transmission scheme and a relaxed HARQ ACK-NACK transmission scheme in accordance with an example;
FIG. 2 illustrates abstraction syntax notation one (ASN.1) code and a corresponding description of a self-contained hybrid automatic repeat request (HARQ) acknowledgement (ACK)-negative acknowledgement (NACK) transmission scheme in accordance with an example;
FIG. 3 illustrates a partition of a fifth generation (5G) physical random access channel (xPRACH) preamble resource used for requesting a default hybrid automatic repeat request (HARQ) acknowledgement (ACK)-negative acknowledgement (NACK) transmission scheme and a relaxed HARQ ACK-NACK transmission scheme in accordance with an example;
FIG. 4 illustrates downlink control information (DCI) bit fields that indicate a hybrid automatic repeat request (HARQ) acknowledgement (ACK)-negative acknowledgement (NACK) delay accordance with an example;
FIG. 5A illustrates a fifth generation (5G) physical uplink control channel (xPUCCH) resource collision in accordance with an example;
FIG. 5B illustrates a fifth generation (5G) physical channel hybrid ARQ indicator channel (xPHICH) resource collision in accordance with an example;
FIG. 6 illustrates a demodulation reference signal (DM-RS) pattern for a self-contained hybrid automatic repeat request (HARQ) acknowledgement (ACK)-negative acknowledgement (NACK) transmission scheme in accordance with an example;
FIG. 7 illustrates a demodulation reference signal (DM-RS) pattern for a self-contained hybrid automatic repeat request (HARQ) acknowledgement (ACK)-negative acknowledgement (NACK) transmission scheme with reduced overhead in accordance with an example;
FIG. 8 illustrates a demodulation reference signal (DM-RS) pattern for a relaxed hybrid automatic repeat request (HARQ) acknowledgement (ACK)-negative acknowledgement (NACK) transmission scheme in accordance with an example;
FIG. 9 depicts functionality of a user equipment (UE) operable to perform hybrid automatic repeat request (HARQ) acknowledgement (ACK)-negative acknowledgement (NACK) transmissions in accordance with an example;
FIG. 10 depicts functionality of an eNodeB operable to configure a hybrid automatic repeat request (HARQ) acknowledgement (ACK)-negative acknowledgement (NACK) transmission scheme for a user equipment (UE) in accordance with an example;
FIG. 11 depicts a flowchart of a machine readable storage medium having instructions embodied thereon for performing hybrid automatic repeat request (HARQ) acknowledgement (ACK)-negative acknowledgement (NACK) transmissions at a user equipment (UE) in accordance with an example;
FIG. 12 illustrates a diagram of a wireless device (e.g., UE) and a base station (e.g., eNodeB) in accordance with an example; and
FIG. 13 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

Before the present technology is disclosed and described, it is to be understood that this technology is not limited to the particular structures, process actions, or materials disclosed herein. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Mobile communication has evolved significantly from early voice systems to today's highly sophisticated integrated communication platform. The next generation wireless communication system, 5G, can provide access to information and sharing of data by various users and applications. 5G is expected to be a unified network/system that is capable of handling different and sometimes conflicting performance dimensions and services. Such diverse multi-dimensional constraints are driven by different services and applications. In general, 5G can be an evolution of 3GPP LTE-Advanced. 5G can potentially include new Radio Access Technologies (RATs) to enrich people lives with better, simple and seamless wireless connectivity solutions, while delivering fast, rich contents and services.

For 5G wireless systems, to reduce Hybrid automatic repeat request (HARQ) acknowledgement (HARQ-ACK) latency, HARQ feedback can be transmitted in a same subframe in which 5G physical downlink shared channel (xPDSCH) is scheduled. Such a HARQ feedback scheme can be referred to as a self-contained HARQ ACK-NACK transmission scheme. The self-contained HARQ ACK-NACK transmission scheme can be implemented using a self-contained subframe structure, which enables the HARQ feedback to be transmitted in the same subframe. At the receiver side, the following operations can be completed in one subframe using the self-contained HARQ ACK-NACK transmission scheme: (1) demodulation and decoding for control and the associated data channel; and (2) preparation and transmission of the uplink control channel carrying the HARQ feedback for the decoded data channel. Support of this self-contained subframe structure can necessitate a high end user equipment (UE) with enhanced processing capability.

In general, it may be unnecessary to always transmit the HARQ feedback with low-latency (i.e., in the same subframe). If longer HARQ feedback delays are tolerable for particular applications or services, then it is desirable from the UE side to support flexible HARQ feedback delays, which can reduce UE power consumption. With flexible HARQ feedback delays, UEs with different capabilities can also be supported. For example, a gap between the xPDSCH transmission and associated HARQ feedback can be defined, but lower end UEs may not support such fast processing capability as compared to high end UEs.

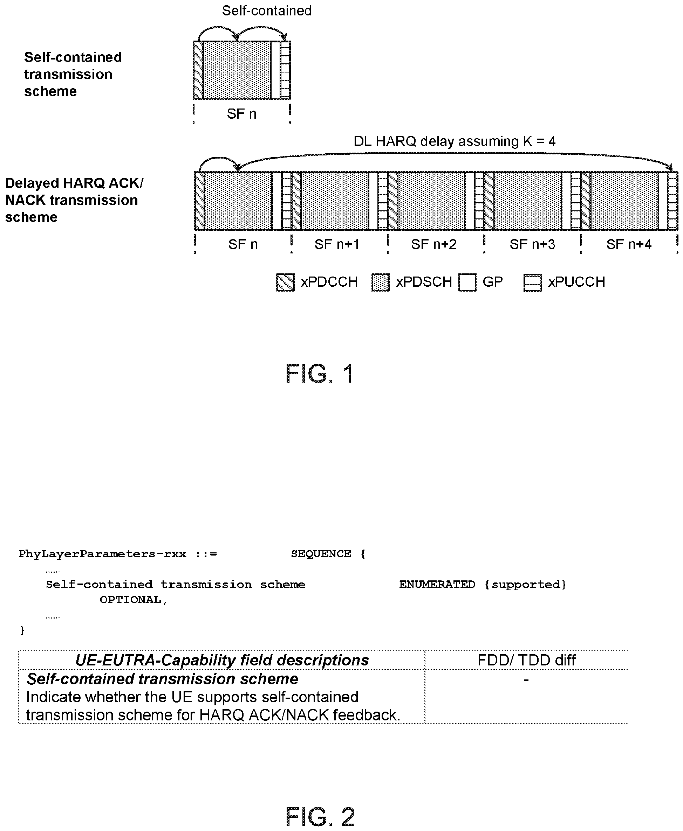

FIG 1 illustrates an example of a self-contained hybrid automatic repeat request (HARQ) acknowledgement (ACK)-negative acknowledgement (NACK) transmission scheme and a relaxed HARQ ACK-NACK transmission scheme. A self-contained subframe structure can be utilized for the HARQ ACK-NACK transmission scheme. Each subframe can include a 5G physical downlink control channel (xPDCCH), a 5G physical downlink shared channel (xPDSCH), a guard period (GP) and a 5G physical uplink control channel (xPUCCH). The xPDSCH (which is the downlink data channel) can be scheduled by the xPDCCH (which is the downlink control channel). The xPDSCH can be transmitted after the associated xPDCCH. The guard period (GP) can be inserted between the xPDSCH and the xPUCCH to accommodate the switching time and round-trip propagation delay.

As shown in FIG. 1, in the self-contained HARQ ACK-NACK transmission scheme, the xPDSCH (which carries the downlink data) and the xPUCCH (which carries the uplink HARQ ACK-NACK for the downlink data) can be in the same subframe. In the relaxed (or delayed) HARQ ACK-NACK transmission scheme, downlink data can be received via the xPDSCH in subframe n and HARQ ACK-NACK for the downlink data can be transmitted in uplink via the xPUCCH in subframe n+4, wherein n is an integer. In other words, in the relaxed HARQ ACK-NACK transmission scheme, there can be a HARQ ACK-NACK feedback delay of four subframes.

When the UE supports both the self-contained and the relaxed HARQ ACK-NACK transmission schemes, one of the transmission schemes, e.g., the transmission scheme with relaxed HARQ feedback delay, can be a default mode for power consumption saving. Therefore, the UE can utilize a mechanism to request another type of transmission scheme, e.g., the self-contained HARQ ACK-NACK transmission scheme. In other words, usage of the self-contained HARQ ACK-NACK transmission scheme can be triggered at the UE when the relaxed HARQ ACK-NACK transmission scheme is set as the default configuration for the UE. The self-contained HARQ ACK-NACK transmission scheme can be useful to support low latency and mission critical communication.

The present technology describes mechanisms to schedule the self-contained HARQ ACK-NACK transmission scheme for UEs in the 5G cellular system. The scheduling of the self-contained HARQ ACK-NACK transmission scheme can involve an exchange of UE capability between the UE and the eNodeB. Based on the UE's capability and the eNodeB's own capability, the eNodeB can determine to allow the UE to use the self-contained HARQ ACK-NACK transmission scheme. The eNodeB can schedule the self-contained HARQ ACK-NACK transmission scheme in the uplink. In addition, dynamic demodulation reference signal (DM-RS) adaptation can be implemented for the self-contained and relaxed HARQ ACK-NACK feedback transmission schemes.

In one example, the UE can support both the self-contained HARQ ACK-NACK transmission scheme and the relaxed HARQ ACK-NACK transmission scheme. The self-contained HARQ ACK-NACK transmission scheme can provide HARQ ACK-NACK feedback in the same subframe, whereas the relaxed HARQ ACK-NACK transmission scheme can involve a relaxed HARQ feedback delay. In one example, the relaxed HARQ ACK-NACK transmission scheme can be set as a default configuration for power consumption reduction. Alternatively, the self-contained HARQ ACK-NACK transmission scheme can be set as the default configuration. The UE can use mechanisms to indicate its capability of another type of transmission scheme, such as the self-contained HARQ ACK-NACK transmission scheme, when the relaxed HARQ ACK-NACK transmission scheme is set as the default configuration.

In one example, the eNodeB may not support all HARQ ACK-NACK feedback transmission schemes. For example, in initial deployments, eNodeBs may support one or a subset of feedback transmissions modes. Similarly, a given UE may also support one or a subset of feedback transmission schemes. In such cases, the eNodeB and the UE can agree on a common HARQ ACK-NACK transmission scheme for usage at the UE.

The following steps can be performed between the UE and the eNodeB: (1) an initial capabilities exchange between the UE and the eNodeB, in which the UE can indicate that it supports one or a subset of feedback transmissions modes. For example, the UE can indicate its support of the self-contained HARQ ACK-NACK transmission scheme and/or the relaxed HARQ ACK-NACK transmission scheme. (2) The UE can request the eNodeB for usage of a particular feedback transmission mode. (3) The eNodeB, based on its own feature set and the UE's HARQ ACK-NACK feedback capability, can configure the UE with a suitable HARQ ACK-NACK transmission scheme. Alternatively, the eNodeB can dynamically configure the UE to use the self-contained HARQ ACK-NACK transmission scheme (when the relaxed HARQ ACK-NACK transmission scheme is the default configuration) without receiving an explicit request from the UE.

### Exchange of UE Capability Information

In one configuration, the UE can generate a UE capability information message for transmission to the eNodeB. The UE capability information message can include a field that indicates whether or not the UE supports the self-contained HARQ ACK-NACK transmission scheme. As previously described, the self-contained HARQ ACK-NACK transmission scheme can use the self-contained subframe structure, which enables the UE to receive downlink data and transmit in uplink HARQ ACK-NACK feedback for the received downlink data in the same subframe. The eNodeB can acquire the UE capabilities (which include support of the self-contained HARQ ACK-NACK transmission scheme and/or the relaxed HARQ ACK-NACK transmission scheme) after a handover completion or when the UE has changed its radio access capability. The UE capabilities can be uploaded from the eNodeB to a mobility management entity (MME).

FIG 2 illustrates an example of abstraction syntax notation one (ASN.1) code and a corresponding description of a self-contained HARQ ACK-NACK transmission scheme. The ASN.1 code can include a list of physical layer parameters, which can include a 'self-contained transmission scheme' field or parameter. The 'self-contained transmission scheme' field or parameter can indicate whether a user equipment (UE) supports a self-contained transmission scheme for HARQ ACK-NACK feedback.

### Requesting of HARQ ACK-NACK Transmission Scheme

In one configuration, the UE can request usage of the self-contained HARQ ACK-NACK transmission scheme in the uplink (UL) from the eNodeB. There are various mechanisms the UE can utilize the request usage of the self-contained HARQ ACK-NACK transmission scheme, as described below.

In one example, a 5G physical random access channel (xPRACH) with a dedicated resource can be used by the UE to request usage of the self-contained HARQ ACK-NACK transmission scheme from the eNodeB. After successful detection of the xPRACH on the dedicated resource (e.g., time/frequency/PRACH sequence/preamble), the eNodeB can allocate resources for transmission of self-contained HARQ ACK-NACK feedback subframes. An xPRACH resource used for requesting the self-contained HARQ ACK-NACK transmission scheme (or for a default transmission scheme, such as the relaxed HARQ ACK-NACK transmission scheme) can be multiplexed in a time division multiplexing (TDM), frequency division multiplexing (FDM) and/or code division multiplexing (CDM) manner. In addition, the dedicated resource (or resource partition) can be predefined or configured by higher layers via a 5G master information block (xMIB), a 5G system information block (xSIB) or radio resource control (RRC) signaling.

In one example, one or a plurality of signature sequences can be reserved for the xPRACH to request usage of the self-contained HARQ ACK-NACK transmission scheme. In another example, one or a plurality of frequency resources can be allocated for the xPRACH to request the self-contained HARQ ACK-NACK transmission scheme.

In one example, one or a plurality of time resources can be allocated for the xPRACH to request usage of the self-contained HARQ ACK-NACK transmission scheme. For example, an xPRACH for a default transmission scheme (e.g., relaxed HARQ ACK-NACK transmission scheme) can be transmitted in one or a multiple of subframes 0, 2, 4, 6, 8 within one frame, while an xPRACH used to request the self-contained HARQ ACK-NACK transmission scheme can be transmitted in one or a multiple of subframes 1, 3, 5, 7, 9. In another example, a combination of TDM and/or FDM and/or CDM based multiplexed schemes can be used to separate the resource for the default transmission scheme (e.g., relaxed HARQ ACK-NACK transmission scheme) and for requesting the self-contained HARQ-ACK transmission scheme.

In one example, a scheduling request (SR) with a dedicated resource in an LTE cell or a 5G cell can be used by the UE to request the self-contained HARQ ACK-NACK transmission scheme. More specifically, a dedicated SR resource can be configured by the eNodeB via UE dedicated RRC signaling. When the UE intends to transmit the self-contained subframe in the uplink, the UE can use the dedicated SR resource for the SR transmission. After successful detection of the SR on the dedicated SR resource, the eNodeB can schedule the UE to transmit uplink data in the self-contained HARQ ACK-NACK transmission scheme.

In one example, a logical channel ID in a medium access control (MAC) layer can be defined in an LTE cell or a 5G cell, and the logical channel ID can be used by the UE to request the self-contained HARQ ACK-NACK transmission scheme. In addition, a corresponding MAC control element can include a UE decoding capability, i.e., HARQ feedback delay. This MAC control element can be transmitted in an Msg3 in a random access procedure (RACH) procedure, or the MAC control element can be transmitted together with a buffer status report (BSR) for an uplink data transmission triggered by the SR.

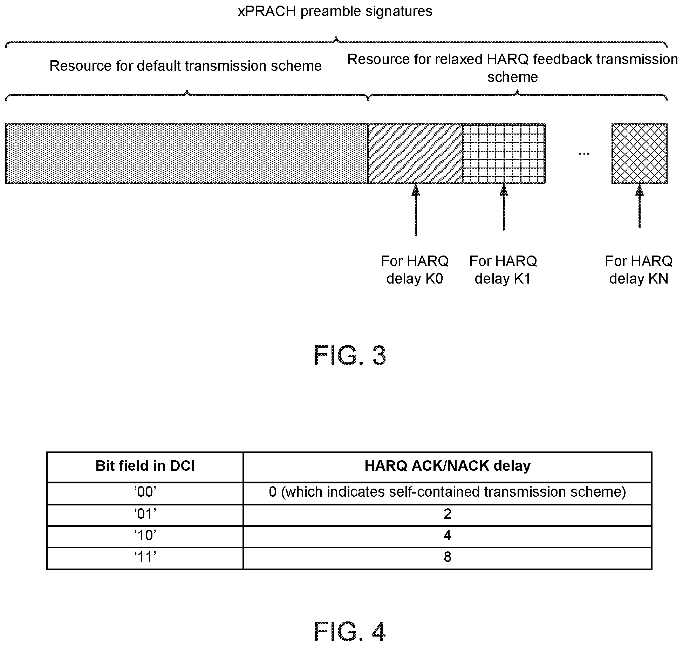

FIG 3 illustrates an exemplary partition of a fifth generation (5G) physical random access channel (xPRACH) preamble resource used for requesting a default hybrid automatic repeat request (HARQ) acknowledgement (ACK)-negative acknowledgement (NACK) transmission scheme and a relaxed HARQ ACK-NACK transmission scheme. In this configuration, the default HARQ ACK-NACK transmission scheme can be a self-contained HARQ ACK-NACK transmission scheme. The xPRACH resource partition can be predefined or configured by higher layers via xMIB, xSIB or RRC signaling. In addition, the xPRACH or the SR with dedicated resources can be used to request the relaxed HARQ feedback transmission scheme with different HARQ delays.

As shown in FIG 3, xPRACH preamble signatures can include a resource for the default transmission scheme and a resource for the relaxed HARQ ACK-NACK transmission scheme. In this configuration, the default HARQ ACK-NACK transmission scheme can be the self-contained HARQ ACK-NACK transmission scheme. With respect to the resource for the relaxed HARQ ACK-NACK transmission scheme, a first partition of the xPRACH preamble resource can be for HARQ delay K₀, a second partition of the xPRACH preamble resource can be for HARQ delay K₁, and an Nth partition of the xPRACH preamble resource can be for HARQ delay K_{N}. Therefore, the different resources can be allocated for HARQ ACK-NACK feedback with different delays. In addition, the delays Kᵢ,i=0,···,N-1 can be predefined or configured by higher layers.

### Scheduling of HARQ ACK-NACK Transmission Scheme

To support dynamic scheduling of HARQ ACK-NACK transmission schemes with different HARQ feedback latencies, the eNodeB can transmit an indication that configures the UE to use the self-contained HARQ ACK-NACK transmission scheme or the relaxed HARQ ACK-NACK transmission scheme. The indication can be transmitted to the UE in downlink control information (DCI) via a 5G physical downlink control channel (xPDCCH). The indication can be included in the DCI for uplink grant and downlink assignment on the xPDCCH. In some cases, the eNodeB can transmit the indication in response to receiving a request to use a particular HARQ ACK-NACK transmission scheme from the UE, or alternatively, the eNodeB can dynamically configure the HARQ ACK-NACK transmission scheme for the UE without the request.

In one example, one bit field can be included in a DCI format to differentiate the self-contained HARQ ACK/NACK transmission scheme from the relaxed HARQ ACK/NACK transmission scheme. For example, bit "0" can indicate the self-contained HARQ ACK-NACK transmission scheme and bit "1" can indicate the relaxed HARQ ACK-NACK transmission scheme. In other words, the indication transmitted from the eNodeB to the UE can include a "0" or "1" depending on whether the eNodeB configures the UE for the self-contained HARQ ACK-NACK transmission scheme or the relaxed HARQ ACK-NACK transmission scheme, respectively. For the relaxed HARQ ACK-NACK feedback transmission scheme, the HARQ feedback timeline can be predefined in the specification or configured by higher layers via a 5G master information block (xMIB), 5G system information block (xSIB) and/or UE specific RRC signaling.

FIG. 4 illustrates exemplary downlink control information (DCI) bit fields that indicate a hybrid automatic repeat request (HARQ) acknowledgement (ACK)-negative acknowledgement (NACK) delay. The DCI bit fields can correspond to a set of predefined fixed HARQ ACK-NACK feedback timeline candidates. A given DCI bit field can indicate one of the four possible fixed HARQ ACK-NACK feedback timeline candidates. The HARQ ACK/NACK delay can indicate the gap between a data transmission and HARQ ACK/NACK feedback. One HARQ ACK-NACK feedback timeline from the set of candidates can be indicated by higher layers in a semi-static manner or through DCI formats on xPDCCH. In other words, the DCI bit field can be included in an indication that is transmitted from an eNodeB to a UE via the xPDCCH.

In the example shown in FIG. 4, a DCI bit field of '00' can indicate a HARQ ACK-NACK feedback delay of 0 subframes. In other words, the DCI bit field of '00' can indicate the self-contained HARQ ACK-NACK transmission scheme. A DCI bit field of '01' can indicate a HARQ ACK-NACK feedback delay of 2 subframes. A DCI bit field of '10' can indicate a HARQ ACK-NACK feedback delay of 4 subframes. A DCI bit field of '11' can indicate a HARQ ACK-NACK feedback delay of 8 subframes. Therefore, the DCI bit field of '00' can relate to the self-contained HARQ ACK-NACK transmission scheme, and the bit fields of '01', '10' and '11' can relate to the relaxed HARQ ACK-NACK transmission scheme.

In one configuration, relaxed HARQ ACK-NACK feedback can be transmitted by scheduled uplink transmissions on the xPUSCH. In this case, the HARQ ACK-NACK feedback can be multiplexed with uplink shared channel (UL-SCH) data on the xPUSCH. Alternatively, the HARQ ACK-NACK feedback can be multiplexed with other uplink control information (UCI), such as channel state information (CSI) feedback including rank indication (RI), precoder matrix indication (PMI), channel quality indication (CQI), etc. The HARQ ACK-NACK feedback can also be multiplexed with both other UCI and UL-SCH data onto the scheduled xPUSCH.

In one configuration, more than one bit can be included in the DCI to indicate the self-contained HARQ ACK-NACK transmission scheme or the relaxed HARQ ACK-NACK transmission scheme, respectively. For example, N_{delay} bits can be included in the DCI and a specific codeword, e.g., 000... 0, can indicate the self-contained HARQ ACK-NACK transmission scheme. Then, the other codewords can indicate that the relaxed HARQ ACK-NACK transmission scheme is used and the codeword itself can be used to indicate the delay of the relaxed HARQ ACK-NACK feedback transmission. For example, for the relaxed HARQ ACK-NACK transmission scheme, the HARQ ACK-NACK feedback for a xPDSCH transmission in subframe n can be transmitted in subframe n+k where k is given by the N_{delay} bits included in the DCI, i.e., 00..0 corresponds to k=0 (self-contained HARQ ACK-NACK transmission scheme), 00... 01 corresponds to k=1, and so forth.

In one example, only valid subframes can be counted when determining the subframe n+k for transmission of the relaxed HARQ ACK-NACK feedback. For example, some subframes can be reserved for downlink transmissions only, e.g., to transmit common control channels, synchronization signals, or other reference signals for beam tracking, frequency/time offset tracking, phase noise tracking, etc. Alternatively, other subframes can be dedicated uplink subframes but are solely used for transmissions of the random access channel.

In one example, some subframes can be invalid subframes by RRC configuration. The UE can be configured with valid subframes for HARQ ACK-NACK feedback transmission by higher layers via a 5G master information block (xMIB), 5G system information block (xSIB) and/or UE specific RRC signaling. For example, the DCI can indicate k=4 in subframe n but subframe n+1 is an invalid subframe (either by specification or higher layers). Therefore, the UE can transmit the HARQ ACK-NACK feedback in subframe n+5.

In one configuration, when the eNodeB schedules self-contained HARQ ACK-NACK feedback and relaxed HARQ ACK-NACK feedback for two different UEs using a same control channel element (CCE) element, a resource collision can occur in the xPUCCH or xPHICH due to the two colliding transmissions on the same resource.

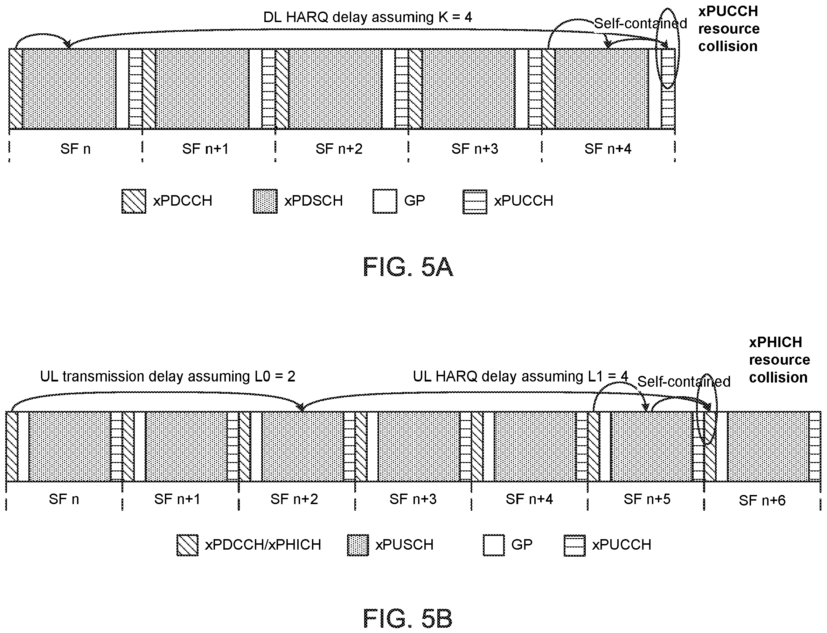

FIG 5A illustrates an example of a fifth generation (5G) physical uplink control channel (xPUCCH) resource collision, which can occur when both the self-contained HARQ ACK-NACK transmission scheme and the relaxed HARQ ACK-NACK transmission scheme coexist in the same wireless system. For example, the resource collision can occur for the transmission of the 5G physical uplink control channel (xPUCCH), which carries DL HARQ ACK/NACK feedback. As shown in the example in FIG 5A, in accordance with the relaxed HARQ ACK-NACK transmission scheme, downlink data can be received on subframe n, and HARQ ACK-NACK feedback for the downlink data can be transmitted in the uplink in subframe n+4. In addition, in accordance with the self-contained HARQ ACK-NACK transmission scheme, downlink data can be received on subframe n+4 and HARQ ACK-NACK feedback for the downlink data can be transmitted in the uplink in subframe n+4. As a result, a resource collision can occur in subframe n+4.

FIG 5B illustrates an example of a fifth generation (5G) physical HARQ indicator channel (PHICH) resource collision, which can occur when both the self-contained HARQ ACK-NACK transmission scheme and the relaxed HARQ ACK-NACK transmission scheme coexist in the same wireless system. For example, the resource collision can occur for the transmission of the 5G physical HARQ indicator channel (xPHICH) which carries UL HARQ feedback. The xPHICH can carry the HARQ ACK-NACK feedback for the corresponding xPUSCH transmission.

To avoid resource collisions of the xPUCCH or xPHICH transmissions, a resource index for the transmission of xPUCCH or xPHICH can be defined as a function of the indication of the self-contained and relaxed HARQ ACK-NACK transmission scheme. For example, a one-bit indicator can be included in the DCI, and the one-bit indicator can be used to define the resource index for the transmission of the xPUCCH or xPHICH. In addition, when a set of fixed HARQ feedback timeline candidates are defined in the specification, the indication for these HARQ feedback timeline candidates can be included when determining the resource index for the transmission of xPUCCH or xPHICH.

### Dynamic DM-RS Adaptation

In one example, in order to support the self-contained HARQ ACK-NACK transmission scheme, a demodulation reference signal (DM-RS) pattern can be defined, such that a receiver is enabled to decode the packet in a timely manner. In typical UE receiver processing, the UE (1) receives pilot signals (e.g., DM-RS), (2) performs channel estimation, (3) obtains log-likelihood ratios (LLRs) associated with data channels based on the channel estimates, and (4) performs decoding to obtain an estimate of the packet. While some of these operations can be pipelined, there can be certain delays introduced due to inter-dependency of the operations (e.g., channel estimation cannot be completed until all pilot signals are received, etc.). To enable early decoding, such delays are to be avoided or minimized. From a channel estimation perspective, it can be desirable to place the pilot signals (e.g., DM-RS) in the beginning of the self-contained subframe. In other words, channel estimation can be available prior to data channel processing. Therefore, the UE can decode the pilot signal (e.g., DM-RS) in the first part of the self-contained subframe, and in the remaining part of the self-contained subframe, the UE can use channel estimation and decode and demodulate the downlink data.

In one example, for the transmission of the xPDSCH or physical uplink shared channel (xPUSCH) within a self-contained subframe, higher density DM-RS can be located at the beginning of the data transmission. Furthermore, an additional reference signal in the 2nd slot of the self-contained subframe can be transmitted to aid the receiver for various purposes, such as refined channel estimation for data occurring at the end of self-contained subframe, frequency offset and Doppler spread tracking, etc.

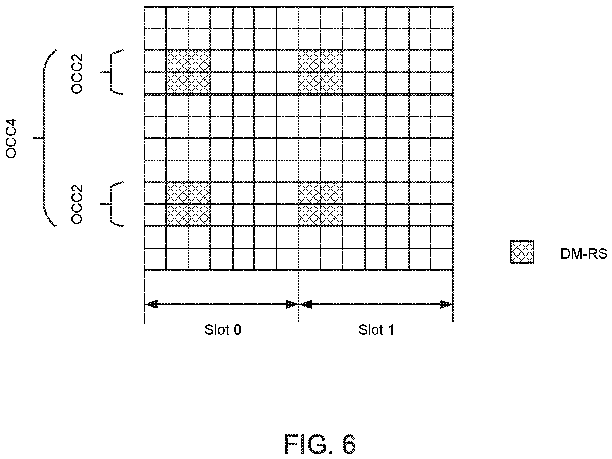

FIG. 6 illustrates an exemplary demodulation reference signal (DM-RS) pattern for a self-contained hybrid automatic repeat request (HARQ) acknowledgement (ACK)-negative acknowledgement (NACK) transmission scheme. As shown in the DM-RS pattern, an orthogonal cover code (OCC) can be applied only in a frequency domain to enable self-contained HARQ ACK-NACK transmissions within one subframe. By applying the OCC only in the frequency domain and not in a time domain, a receiver is allowed to support various operations, such as an ability to track a frequency offset and Doppler spread in the time domain. Furthermore, in this example, four antenna ports (AP) can be multiplexed in the frequency domain using length-4 of OCC code.

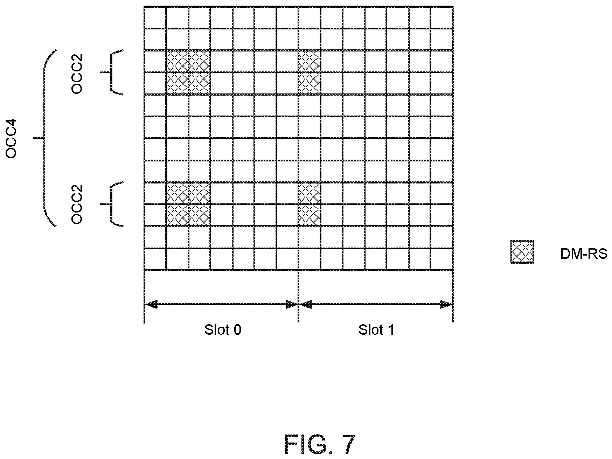

FIG. 7 illustrates an exemplary demodulation reference signal (DM-RS) pattern for a self-contained hybrid automatic repeat request (HARQ) acknowledgement (ACK)-negative acknowledgement (NACK) transmission scheme with reduced overhead. As shown in the DM-RS pattern, an orthogonal cover code (OCC) can be applied only in a frequency domain (and not in a time domain) to enable self-contained HARQ ACK-NACK transmissions within one subframe. To reduce the overhead for the DM-RS, only one of the DM-RS symbols in the 2^{nd} slot can be transmitted and the symbol typically reserved for the other DM-RS symbols can be used for data. However, DM-RS symbols in the 2^{nd} slot can be used for frequency offset and Doppler spreading tracking.

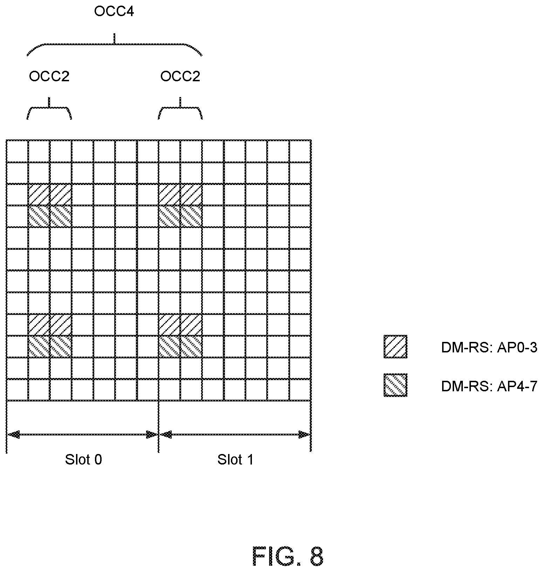

FIG. 8 illustrates an exemplary demodulation reference signal (DM-RS) pattern for a relaxed hybrid automatic repeat request (HARQ) acknowledgement (ACK)-negative acknowledgement (NACK) transmission scheme. As shown in the DM-RS pattern, for the relaxed HARQ ACK-NACK transmission scheme, an orthogonal cover code (OCC) can be applied in a time domain (but not in a frequency domain) to improve channel estimation in the frequency domain. In this example, four antenna ports (APs) (e.g., AP0-3 or AP4-7) can be multiplexed in the frequency domain using length-4 of OCC code. In addition, AP0-3 and AP4-7 can be multiplexed in a frequency division multiplexing (FDM) manner.

In one example, the DM-RS patterns can be the same in terms of occupied time and frequency resources for the self-contained and relaxed HARQ ACK-NACK transmission schemes. However, the OCCs can be applied differently depending on the type of HARQ ACK-NACK transmission scheme. For example, the OCCs can be applied only in the frequency domain and not the time domain with respect to the self-contained HARQ ACK-NACK transmission scheme, and the OCCs can be applied only in the time domain and not the frequency domain with respect to the relaxed HARQ ACK-NACK transmission scheme.

As previously described, the eNodeB can transmit DCI to the UE that includes an indication of the self-contained or relaxed HARQ ACK-NACK transmission scheme. In one example, the DCI can include a field to indicate the type of OCC applied to the DM-RS pattern. For example, when the self-contained HARQ ACK-NACK transmission scheme is triggered, the DCI field can indicate that the OCC is applied in the frequency domain for a data transmission. When the relaxed HARQ ACK-NACK transmission scheme is triggered, the DCI field can indicate that the OCC is applied in the time domain for the data transmission. Therefore, the DCI field can define two OCC types - OCC applied in the frequency domain and OCC applied in the time domain.

In one example, the UE can receive downlink control information (DCI) indicating a downlink or uplink data resource allocation, a modulation and coding scheme associated with downlink data, and at least one of the following fields - (1) OCC type field indicator, and (2) HARQ feedback mode indicator.

In one example, in a fifth generation (5G) wireless communication system, a user equipment (UE) can report a UE capability information message to an eNodeB, and the UE capability information message can indicate that the UE supports a self-contained HARQ ACK-NACK transmission scheme. The UE can transmit a request for the self-contained HARQ ACK-NACK transmission scheme to the eNodeB. The request can be transmitted via a 5G physical random access channel (xPRACH) or a scheduling request (SR). The UE can receive an indication of the self-contained HARQ ACK-NACK transmission scheme from the eNodeB. The indication can be received in downlink control information (DCI) via a 5G physical downlink control channel (xPDCCH).

In one example, the UE capability information message can indicate that the UE supports the self-contained HARQ-ACK transmission scheme or one or a subset of relaxed HARQ ACK-NACK feedback transmissions modes with different HARQ delays.

In one example, the indication of the self-contained HARQ ACK-NACK feedback transmission scheme can be included in the downlink control information (DCI) for uplink grant and downlink assignment on the xPDCCH.

In one example, the indication can include a one bit field to differentiate a self-contained HARQ ACK-NACK transmission scheme from a relaxed HARQ ACK-NACK transmission scheme.

In one example, the indication can indicate a HARQ ACK-NACK feedback timeline. The HARQ feedback timeline can be predefined in the specification or configured by higher layers via a 5G master information block (xMIB), 5G system information block (xSIB) and/or UE specific RRC signaling.

In one example, a set of fixed HARQ ACK-NACK feedback timeline candidates (e.g., four feedback timelines) can be predefined, and one HARQ ACK-NACK feedback timeline from these candidates can be indicated by higher layers in a semi-static manner or through DCI formats on the xPDCCH.

In one example, a resource index for the transmission of a 5G physical uplink control channel (xPUCCH) or a 5G physical HARQ indicator channel (xPHICH) can be defined as a function of the indication of the self-contained or relaxed HARQ ACK-NACK transmission scheme.

In one example, when a set of fixed HARQ ACK-NACK feedback timeline candidates are defined in the specification, the indication for these HARQ ACK-NACK feedback timeline candidates can be used when determining the resource index for the transmission of the xPUCCH or xPHICH.

In one example, a 5G physical random access channel (xPRACH) with a dedicated resource can be used by the UE to request the self-contained HARQ ACK-NACK transmission scheme.

In one example, an xPRACH resource for a default transmission scheme and an xPRACH resource for requesting a self-contained HARQ ACK-NACK transmission scheme can be multiplexed in a time division multiplexing (TDM), frequency division multiplexing (FDM) and/or code division multiplexing (CDM) manner. An xPRACH resource partition can be predefined or configured by higher layers via xMIB, xSIB or RRC signaling.

In one example, a scheduling request (SR) with a dedicated resource in an LTE cell or a 5G cell can be used to request the self-contained HARQ ACK-NACK transmission scheme. The SR with the dedicated resource can be configured by the eNodeB via UE dedicated radio resource control (RRC) signaling.

In one example, a logical channel ID in a medium access control (MAC) layer can be defined in an LTE cell or a 5G cell, and the logical channel ID can be used by the UE to request the self-contained HARQ ACK-NACK transmission scheme. A corresponding MAC control element can include the UE decoding capability in terms of the HARQ ACK-NACK feedback delay.

In one example, the xPRACH or SR with dedicated resources can be used by the UE to request a relaxed HARQ ACK-NACK feedback transmission scheme with different HARQ delays.

In one example, an orthogonal cover code (OCC) can be applied only in a frequency domain for the self-contained HARQ ACK-NACK transmission scheme.

In one example, a same demodulation reference signal (DM-RS) pattern in terms of occupied time and frequency resources can be applied for the self-contained and the relaxed HARQ ACK-NACK transmission schemes.

In one example, a DCI field can be used to indicate a type of orthogonal cover code (OCC) that is applied to the self-contained or the relaxed HARQ ACK-NACK transmission scheme. When the self-contained HARQ ACK-NACK transmission scheme is triggered, the OCC can be applied in the frequency domain. When the relaxed HARQ ACK-NACK transmission scheme is used, the OCC can be applied in the time domain.

In one example, the DCI can include at least one of: (1) an OCC type field indicator; and (2) a HARQ feedback mode indicator.

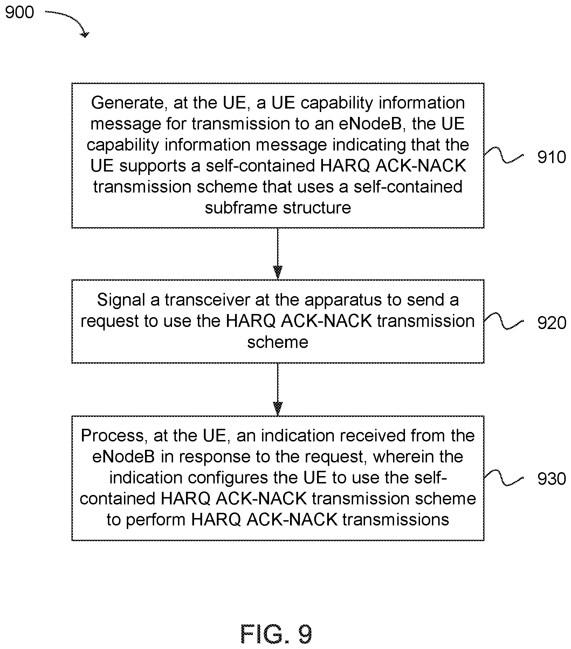

Another example provides functionality 900 of a user equipment (UE) operable to perform hybrid automatic repeat request (HARQ) acknowledgement (ACK)-negative acknowledgement (NACK) transmissions, as shown in FIG 9. The UE can comprise one or more processors and memory configured to: generate, at the UE, a UE capability information message for transmission to an eNodeB, the UE capability information message indicating that the UE supports a self-contained HARQ ACK-NACK transmission scheme that uses a self-contained subframe structure, as in block 910. The UE can comprise one or more processors and memory configured to: signal a transceiver at the apparatus to send a request to use the HARQ ACK-NACK transmission scheme, as in block 920. The UE can comprise one or more processors and memory configured to: process, at the UE, an indication received from the eNodeB in response to the request, wherein the indication configures the UE to use the self-contained HARQ ACK-NACK transmission scheme to perform HARQ ACK-NACK transmissions, as in block 930.

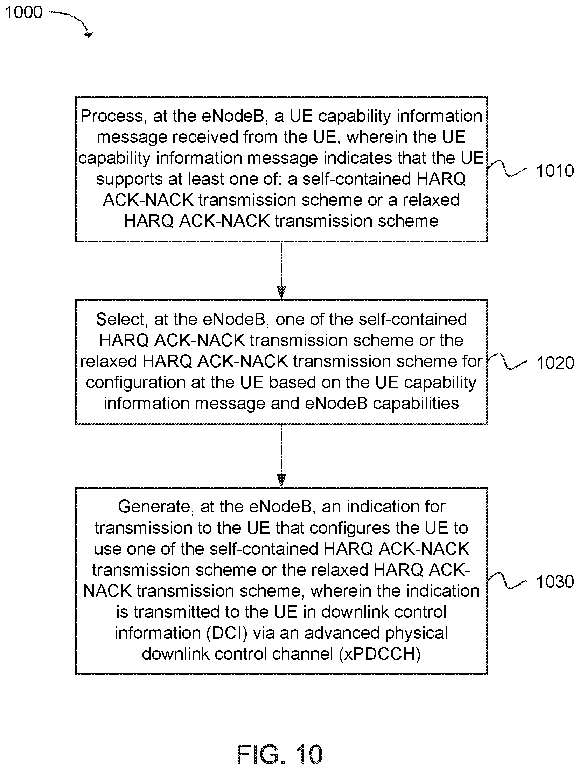

Another example provides functionality 1000 of an eNodeB operable to configure a hybrid automatic repeat request (HARQ) acknowledgement (ACK)-negative acknowledgement (NACK) transmission scheme for a user equipment (UE), as shown in FIG 10. The UE can comprise one or more processors and memory configured to: process, at the eNodeB, a UE capability information message received from the UE, wherein the UE capability information message indicates that the UE supports at least one of: a self-contained HARQ ACK-NACK transmission scheme or a relaxed HARQ ACK-NACK transmission scheme, as in block 1010. The UE can comprise one or more processors and memory configured to: select, at the eNodeB, one of the self-contained HARQ ACK-NACK transmission scheme or the relaxed HARQ ACK-NACK transmission scheme for configuration at the UE based on the UE capability information message and eNodeB capabilities, as in block 1020. The UE can comprise one or more processors and memory configured to: generate, at the eNodeB, an indication for transmission to the UE that configures the UE to use one of the self-contained HARQ ACK-NACK transmission scheme or the relaxed HARQ ACK-NACK transmission scheme, wherein the indication is transmitted to the UE in downlink control information (DCI) via an advanced physical downlink control channel (xPDCCH), as in block 1030.

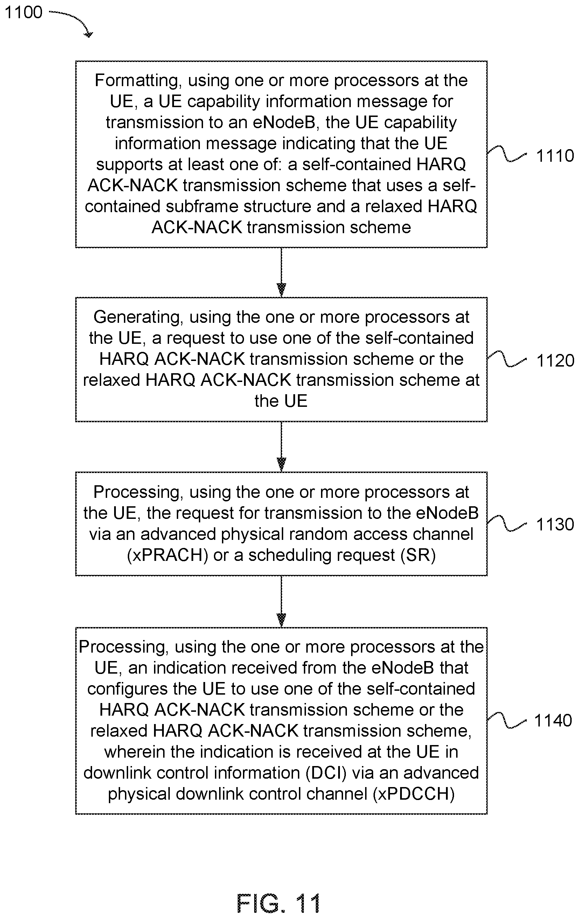

Another example provides at least one machine readable storage medium having instructions 1100 embodied thereon for performing hybrid automatic repeat request (HARQ) acknowledgement (ACK)-negative acknowledgement (NACK) transmissions at a user equipment (UE), as shown in FIG. 11. The instructions can be executed on a machine, where the instructions are included on at least one computer readable medium or one non-transitory machine readable storage medium. The instructions when executed perform: formatting, using one or more processors at the UE, a UE capability information message for transmission to an eNodeB, the UE capability information message indicating that the UE supports at least one of: a self-contained HARQ ACK-NACK transmission scheme that uses a self-contained subframe structure and a relaxed HARQ ACK-NACK transmission scheme, as in block 1110. The instructions when executed perform: generating, using the one or more processors at the UE, a request to use one of the self-contained HARQ ACK-NACK transmission scheme or the relaxed HARQ ACK-NACK transmission scheme at the UE, as in block 1120. The instructions when executed perform: processing, using the one or more processors at the UE, the request for transmission to the eNodeB via an advanced physical random access channel (xPRACH) or a scheduling request (SR), as in block 1130. The instructions when executed perform: processing, using the one or more processors at the UE, an indication received from the eNodeB that configures the UE to use one of the self-contained HARQ ACK-NACK transmission scheme or the relaxed HARQ ACK-NACK transmission scheme, wherein the indication is received at the UE in downlink control information (DCI) via an advanced physical downlink control channel (xPDCCH), as in block 1140.

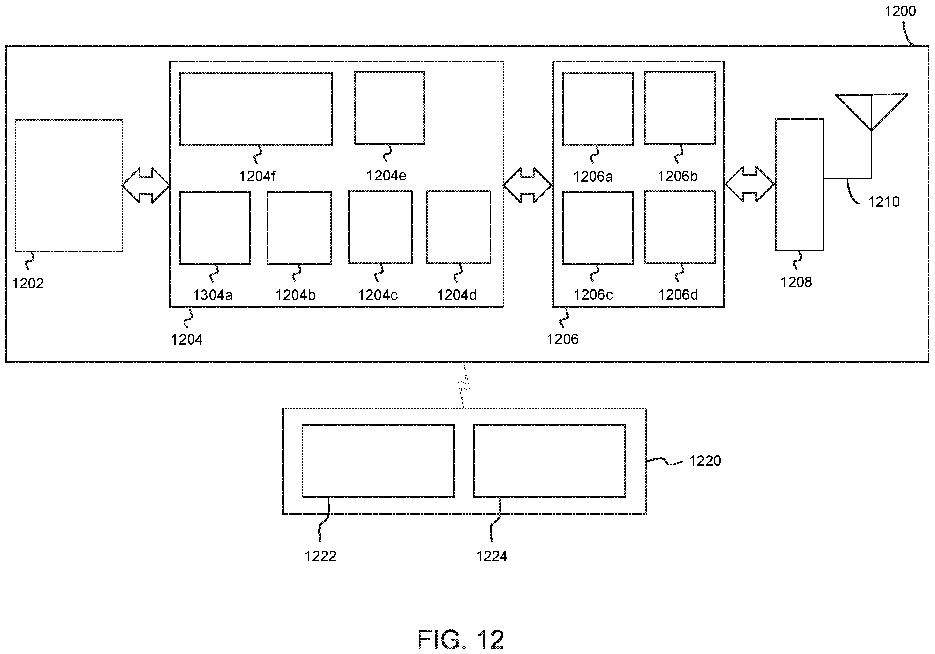

FIG. 12 provides an example illustration of a user equipment (UE) device 1200 and a node 1220. The UE device 1200 can include a wireless device, a mobile station (MS), a mobile wireless device, a mobile communication device, a tablet, a handset, or other type of wireless device. The UE device 1200 can include one or more antennas configured to communicate with the node 1220 or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The node 1220 can include one or more processors 1222 and memory 1224. The UE device 1200 can be configured to communicate using at least one wireless communication standard including 3GPP LTE, WiMAX, High Speed Packet Access (HSPA), Bluetooth, and WiFi. The UE device 1200 can communicate using separate antennas for each wireless communication standard or shared antennas for multiple wireless communication standards. The UE device 1200 can communicate in a wireless local area network (WLAN), a wireless personal area network (WPAN), and/or a WWAN.

In some embodiments, the UE device 1200 may include application circuitry 1202, baseband circuitry 1204, Radio Frequency (RF) circuitry 1206, front-end module (FEM) circuitry 1208 and one or more antennas 1210, coupled together at least as shown.

The application circuitry 1202 may include one or more application processors. For example, the application circuitry 1202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include a storage medium, and may be configured to execute instructions stored in the storage medium to enable various applications and/or operating systems to run on the system.

The baseband circuitry 1204 may include circuitry such as, but not limited to, one or more single-core or multi-core processors. The baseband circuitry 1204 may include one or more baseband processors and/or control logic to process baseband signals received from a receive signal path of the RF circuitry 1206 and to generate baseband signals for a transmit signal path of the RF circuitry 1206. Baseband processing circuity 1204 may interface with the application circuitry 1202 for generation and processing of the baseband signals and for controlling operations of the RF circuitry 1206. For example, in some embodiments, the baseband circuitry 1204 may include a second generation (2G) baseband processor 1204a, third generation (3G) baseband processor 1204b, fourth generation (4G) baseband processor 1204c, and/or other baseband processor(s) 1204d for other existing generations. The baseband circuitry 1204 (e.g., one or more of baseband processors 1204a-d) may handle various radio control functions that enable communication with one or more radio networks via the RF circuitry 1206. The radio control functions may include, but are not limited to, signal modulation/demodulation, encoding/decoding, radio frequency shifting, etc. In some embodiments, modulation/demodulation circuitry of the baseband circuitry 1204 may include Fast-Fourier Transform (FFT), precoding, and/or constellation mapping/demapping functionality. In some embodiments, encoding/decoding circuitry of the baseband circuitry 1204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1204e of the baseband circuitry 1204 may be configured to run elements of the protocol stack for signaling of the PHY, MAC, RLC, PDCP and/or RRC layers. In some embodiments, the baseband circuitry may include one or more audio digital signal processor(s) (DSP) 1204f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1204 and the application circuitry 1202 may be implemented together such as, for example, on a system on a chip (SOC).

In some embodiments, the baseband circuitry 1204 may provide for communication compatible with one or more radio technologies. For example, in some embodiments, the baseband circuitry 1204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1204 is configured to support radio communications of more than one wireless protocol may be referred to as multi-mode baseband circuitry.

The RF circuitry 1206 may enable communication with wireless networks using modulated electromagnetic radiation through a non-solid medium. In various embodiments, the RF circuitry 1206 may include switches, filters, amplifiers, etc. to facilitate the communication with the wireless network. RF circuitry 1206 may include a receive signal path which may include circuitry to down-convert RF signals received from the FEM circuitry 1208 and provide baseband signals to the baseband circuitry 1204. RF circuitry 1206 may also include a transmit signal path which may include circuitry to up-convert baseband signals provided by the baseband circuitry 1204 and provide RF output signals to the FEM circuitry 1208 for transmission.

In some embodiments, the RF circuitry 1206 may include a receive signal path and a transmit signal path. The receive signal path of the RF circuitry 1206 may include mixer circuitry 1206a, amplifier circuitry 1206b and filter circuitry 1206c. The transmit signal path of the RF circuitry 1206 may include filter circuitry 1206c and mixer circuitry 1206a. RF circuitry 1206 may also include synthesizer circuitry 1206d for synthesizing a frequency for use by the mixer circuitry 1206a of the receive signal path and the transmit signal path. In some embodiments, the mixer circuitry 1206a of the receive signal path may be configured to down-convert RF signals received from the FEM circuitry 1208 based on the synthesized frequency provided by synthesizer circuitry 1206d. The amplifier circuitry 1206b may be configured to amplify the down-converted signals and the filter circuitry 1206c may be a low-pass filter (LPF) or band-pass filter (BPF) configured to remove unwanted signals from the down-converted signals to generate output baseband signals. Output baseband signals may be provided to the baseband circuitry 1204 for further processing. In some embodiments, the output baseband signals may be zero-frequency baseband signals, although this is not a necessity. In some embodiments, mixer circuitry 1206a of the receive signal path may comprise passive mixers, although the scope of the embodiments is not limited in this respect.

In some embodiments, the mixer circuitry 1206a of the transmit signal path may be configured to up-convert input baseband signals based on the synthesized frequency provided by the synthesizer circuitry 1206d to generate RF output signals for the FEM circuitry 1208. The baseband signals may be provided by the baseband circuitry 1204 and may be filtered by filter circuitry 1206c. The filter circuitry 1206c may include a low-pass filter (LPF), although the scope of the embodiments is not limited in this respect.

In some embodiments, the mixer circuitry 1206a of the receive signal path and the mixer circuitry 1206a of the transmit signal path may include two or more mixers and may be arranged for quadrature down-conversion and/or up-conversion respectively. In some embodiments, the mixer circuitry 1206a of the receive signal path and the mixer circuitry 1206a of the transmit signal path may include two or more mixers and may be arranged for image rejection (e.g., Hartley image rejection). In some embodiments, the mixer circuitry 1206a of the receive signal path and the mixer circuitry 1206a may be arranged for direct down-conversion and/or direct up-conversion, respectively. In some embodiments, the mixer circuitry 1206a of the receive signal path and the mixer circuitry 1206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1206 may include analog-to-digital converter (ADC) and digital-to-analog converter (DAC) circuitry and the baseband circuitry 1204 may include a digital baseband interface to communicate with the RF circuitry 1206.

In some dual-mode embodiments, a separate radio IC circuitry may be provided for processing signals for each spectrum, although the scope of the embodiments is not limited in this respect.

In some embodiments, the synthesizer circuitry 1206d may be a fractional-N synthesizer or a fractional N/N+1 synthesizer, although the scope of the embodiments is not limited in this respect as other types of frequency synthesizers may be suitable. For example, synthesizer circuitry 1206d may be a delta-sigma synthesizer, a frequency multiplier, or a synthesizer comprising a phase-locked loop with a frequency divider.

The synthesizer circuitry 1206d may be configured to synthesize an output frequency for use by the mixer circuitry 1206a of the RF circuitry 1206 based on a frequency input and a divider control input. In some embodiments, the synthesizer circuitry 1206d may be a fractional N/N+1 synthesizer.

In some embodiments, frequency input may be provided by a voltage controlled oscillator (VCO), although that is not a necessity. Divider control input may be provided by either the baseband circuitry 1204 or the applications processor 1202 depending on the desired output frequency. In some embodiments, a divider control input (e.g., N) may be determined from a look-up table based on a channel indicated by the applications processor 1202.

Synthesizer circuitry 1206d of the RF circuitry 1206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1206 may include an IQ/polar converter.

FEM circuitry 1208 may include a receive signal path which may include circuitry configured to operate on RF signals received from one or more antennas 1210, amplify the received signals and provide the amplified versions of the received signals to the RF circuitry 1206 for further processing. FEM circuitry 1208 may also include a transmit signal path which may include circuitry configured to amplify signals for transmission provided by the RF circuitry 1206 for transmission by one or more of the one or more antennas 1210.

In some embodiments, the FEM circuitry 1208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1206). The transmit signal path of the FEM circuitry 1208 may include a power amplifier (PA) to amplify input RF signals (e.g., provided by RF circuitry 1206), and one or more filters to generate RF signals for subsequent transmission (e.g., by one or more of the one or more antennas 1210.

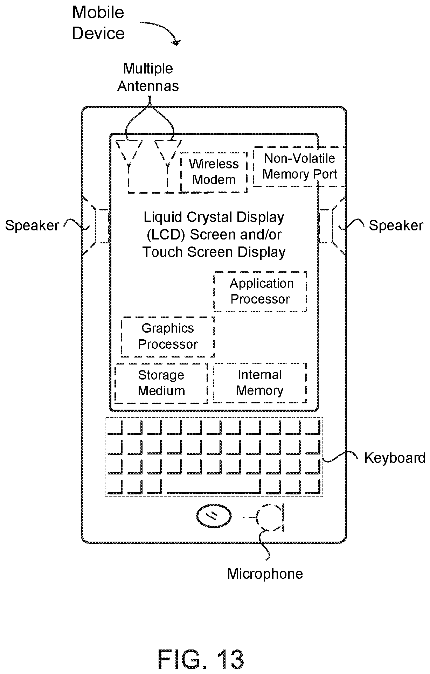

FIG. 13 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 13 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. A non-transitory computer readable storage medium can be a computer readable storage medium that does not include signal. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the principles and concepts of the technology. Accordingly, it is not intended that the technology be limited, except as by the claims set forth below.

## Claims

1. An apparatus for use in a user equipment UE (1200), operable to perform hybrid automatic repeat request HARQ, acknowledgement ACK,-negative acknowledgement NACK, transmissions, the apparatus comprising one or more processors (1202, 1204) and memory configured to:
generate, at the UE (1200), a UE capability information message for transmission to an eNodeB, the UE capability information message indicating that the UE (1200) supports a self-contained HARQ ACK-NACK transmission scheme that uses a self-contained subframe structure;
signal a transceiver (1206, 1208) at the apparatus to send a request to use the HARQ ACK-NACK transmission scheme; and
process, at the UE (1200), an indication received from the eNodeB in response to the request, wherein the indication configures the UE (1200) to use the self-contained HARQ ACK-NACK transmission scheme to perform HARQ ACK-NACK transmissions;
**characterized in that**
the self-contained HARQ ACK-NACK transmission scheme that uses the self-contained subframe structure enables the UE (1200) to perform the following in one subframe:
a demodulation and decoding for an advanced physical downlink control channel, xPDCCH, and an advanced physical downlink shared channel, xPDSCH; and
a transmission of HARQ ACK-NACK feedback for the xPDSCH via an advanced physical uplink control channel, xPUCCH.

2. The apparatus of claim 1, wherein the transceiver (1206, 1208) is further configured to:
transmit, from the UE (1200), the UE capability information message to the eNodeB;
transmit, from the UE (1200) to the eNodeB via an advanced physical random access channel xPRACH, or a scheduling request SR, the request to use the self-contained HARQ ACK-NACK transmission scheme at the UE (1200); and
receive, from the eNodeB in downlink control information DCI, via the xPDCCH, the indication that permits the UE (1200) to use the self-contained HARQ ACK-NACK transmission scheme.

3. The apparatus of claim 1 or 2, wherein the UE capability information message indicates that the UE (1200) supports at least one relaxed HARQ ACK-NACK transmission scheme,
wherein the relaxed HARQ ACK-NACK transmission scheme enables the UE (1200) to transmit HARQ ACK-NACK feedback for the xPDSCH, in accordance with a predefined or configured HARQ ACK-NACK delay, and
wherein the relaxed HARQ ACK-NACK transmission scheme is predefined at the UE (1200) or configured at the UE (1200) by higher layers via a master information block MIB, a system information block SIB, or UE (1200)-specific radio resource control RRC, signaling.

4. The apparatus of claim 1, wherein:
the indication received from the eNodeB is included in downlink control information DCI, for an uplink grant or downlink assignment on the xPDCCH; or
the indication received from the eNodeB is a bit field that indicates the self-contained HARQ ACK-NACK transmission scheme.

5. An apparatus for use in an eNodeB operable to configure a hybrid automatic repeat request HARQ, acknowledgement ACK,-negative acknowledgement NACK, transmission scheme for a user equipment UE (1200), the apparatus comprising one or more processors (1202, 1204) and memory configured to:
process, at the eNodeB, a UE capability information message received from the UE (1200), wherein the UE capability information message indicates whether the UE (1200) supports a self-contained HARQ ACK-NACK transmission scheme or a relaxed HARQ ACK-NACK transmission scheme;
select, at the eNodeB, one of the self-contained HARQ ACK-NACK transmission scheme or the relaxed HARQ ACK-NACK transmission scheme for configuration at the UE (1200) based on the UE capability information message and eNodeB capabilities; and
generate, at the eNodeB, an indication for transmission to the UE (1200) that configures the UE (1200) to use one of the self-contained HARQ ACK-NACK transmission scheme or the relaxed HARQ ACK-NACK transmission scheme, wherein the indication is transmitted to the UE (1200) in downlink control information DCI, via an advanced physical downlink control channel xPDCCH;
**characterized in that**
the self-contained HARQ ACK-NACK transmission scheme enables the eNodeB to perform the following in one subframe:
a modulate and encode for the xPDCCH, and an advanced physical downlink shared channel, xPDSCH; and
a reception of HARQ ACK-NACK feedback for the xPDSCH via an advanced physical uplink control channel, xPUCCH.

6. The apparatus of claim 5, wherein the indication is a bit field that indicates one of the self-contained HARQ ACK-NACK transmission scheme or the relaxed HARQ ACK-NACK transmission scheme; or wherein the indication is a bit field that indicates a selected relaxed HARQ ACK-NACK feedback timeline from a set of fixed HARQ ACK-NACK feedback timeline candidates.

7. The apparatus of claim 5 or 6, further configured to:
define a resource index for HARQ ACK-NACK transmissions via the xPUCCH, or an advanced physical channel hybrid ARQ indicator channel xPHICH, to avoid resource collisions at the xPUCCH or the PHICH,
wherein the resource index is defined as a function of at least one of the indication of the self-contained HARQ ACK-NACK transmission scheme or the relaxed HARQ ACK-NACK transmission scheme and a set of fixed HARQ ACK-NACK feedback timeline candidates.

8. The apparatus of one of claims 5 to 7, further configured to:
process a request received from the UE (1200), wherein the UE (1200) requests to use the self-contained HARQ ACK-NACK transmission scheme at the UE (1200), wherein the request is received from the UE (1200) via an advanced physical random access channel xPRACH, with a dedicated resource,
wherein the dedicated resource in the xPRACH is multiplexed in accordance with at least one of time division multiplexing TDM, frequency division multiplexing FDM, or code division multiplexing CDM, and
wherein the dedicated resource is predefined or configured by higher layers via a master information block MIB, a system information block SIB, or radio resource control RRC, signaling.

9. The apparatus of claim 8, further configured to:
process a request received from the UE (1200), wherein the UE (1200) requests to use the self-contained HARQ ACK-NACK transmission scheme at the UE (1200), wherein the request is received from the UE (1200) via a scheduling request SR, with a dedicated resource,
wherein the dedicated resource is configured by the eNodeB via UE (1200)-dedicated radio resource control RRC, signaling.

10. The apparatus of any of claims 8 to 9, further configured to:
process a request received from the UE (1200), wherein the UE (1200) requests to use the self-contained HARQ ACK-NACK transmission scheme at the UE (1200), wherein a logical channel identifier ID, in a medium access control MAC, layer is defined to enable the UE (1200) to request usage of the self-contained HARQ ACK-NACK transmission scheme.

11. The apparatus of claim 8, further configured to:
process a request received from the UE (1200), wherein the UE (1200) requests to use the relaxed HARQ ACK-NACK transmission scheme at the UE (1200), wherein the request is received from the UE (1200) via an advanced physical random access channel xPRACH, or a scheduling request SR.

12. The apparatus of claim 8, further configured to define a demodulation reference signal DM-RS, pattern in which an orthogonal cover codeOCC, is applied only in a frequency domain to enable the UE (1200) to implement the self-contained HARQ ACK-NACK transmission scheme.

13. The apparatus of claim 8, further configured to define a demodulation reference signalDM-RS, pattern in which an orthogonal cover codeOCC, is applied only in a time domain to enable the UE (1200) to implement the relaxed HARQ ACK-NACK transmission scheme.

14. The apparatus of any of claims 8 to 13, further configured to:
transmit, in the DCI, a field that indicates a type of orthogonal cover codeOCC, to be applied in a demodulation reference signal DM-RS, pattern,
wherein the field indicates that a first OCC is to be applied in a frequency domain when the self-contained HARQ ACK-NACK transmission scheme is triggered at the UE (1200) or the field indicates that a second OCC is to be applied in a time domain when the relaxed HARQ ACK-NACK transmission scheme is triggered at the UE (1200), and
wherein the DCI includes at least one of: an OCC type field indicator and a HARQ feedback mode indicator.

15. At least one machine readable storage medium storing instructions that, when executed by a processor of a user equipment, UE (1200), cause the UE (1200) to perform hybrid automatic repeat request HARQ, acknowledgement ACK,-negative acknowledgement NACK, transmissions by:
formatting a UE capability information message for transmission to an eNodeB, the UE capability information message indicating whether the UE (1200) supports a self-contained HARQ ACK-NACK transmission scheme that uses a self-contained subframe structure or a relaxed HARQ ACK-NACK transmission scheme;
generating a request to use one of the self-contained HARQ ACK-NACK transmission scheme or the relaxed HARQ ACK-NACK transmission scheme at the UE (1200);
processing the request for transmission to the eNodeB via an advanced physical random access channel xPRACH, or a scheduling request SR; and
processing an indication received from the eNodeB that configures the UE (1200) to use one of the self-contained HARQ ACK-NACK transmission scheme or the relaxed HARQ ACK-NACK transmission scheme, wherein the indication is received at the UE (1200) in downlink control information DCI, via an advanced physical downlink control channel xPDCCH;
**characterized in that**
the self-contained HARQ ACK-NACK transmission scheme that uses the self-contained subframe structure enables the UE (1200) to perform the following in one subframe:
demodulating and decoding an advanced physical downlink control channel, xPDCCH, and an advanced physical downlink shared channel, xPDSCH; and
formatting for transmission HARQ ACK-NACK feedback for the xPDSCH via an advanced physical uplink control channel, xPUCCH.

## Patentansprüche

1. Vorrichtung zur Verwendung in einer Benutzereinrichtung, UE, (1200), die betreibbar ist, um Hybrid Automatic Repeat Request, HARQ,-Acknowledgement, ACK,-Negative Acknowledgement, NACK-Übertragungen durchzuführen, wobei die Vorrichtung einen oder mehrere Prozessoren (1202, 1204) und Speicher umfasst, die konfiguriert sind zum:
Erzeugen, an der UE (1200), einer UE-Leistungsfähigkeitsinformationsnachricht zur Übertragung an eine eNodeB, wobei die UE-Leistungsfähigkeitsinformationsnachricht angibt, dass die UE (1200) ein eigenständiges HARQ-ACK-NACK-Übertragungsschema unterstützt, das eine eigenständige Unterrahmenstruktur verwendet;
Signalisieren, an einen Transceiver (1206, 1208) an der Vorrichtung, eine Anforderung zur Verwendung des HARQ-ACK-NACK-Übertragungsschemas zu senden; und
Verarbeiten, an der UE (1200), einer von der eNodeB als Reaktion auf die Anforderung empfangenen Angabe, wobei die Angabe die UE (1200) zur Verwendung des eigenständigen HARQ-ACK-NACK-Übertragungsschemas zum Durchführen von HARQ-ACK-NACK-Übertragungen konfiguriert;
**dadurch gekennzeichnet, dass**
das eigenständige HARQ-ACK-NACK-Übertragungsschema, das die eigenständige Unterrahmenstruktur verwendet, es der UE (1200) ermöglicht, Folgendes in einem Unterrahmen durchzuführen:
eine Demodulation und Decodierung für einen erweiterten physischen Downlink-Steuerkanal, xPDCCH, und einen erweiterten physischen gemeinsam genutzten Downlink-Kanal, xPDSCH; und
eine Übertragung einer HARQ-ACK-NACK-Rückkopplung für den xPDSCH über einen erweiterten physischen Uplink-Steuerkanal, xPUCCH.

2. Vorrichtung nach Anspruch 1, wobei der Transceiver (1206, 1208) ferner konfiguriert ist zum:
Übertragen der UE-Leistungsfähigkeitsinformationsnachricht von der UE (1200) an die eNodeB;
Übertragen der Anforderung zur Verwendung des eigenständigen HARQ-ACK-NACK-Übertragungsschemas an der UE (1200) von der UE (1200) an die eNodeB über einen erweiterten physischen Kanal mit wahlfreiem Zugriff, xPRACH, oder eine Planungsanforderung, SR; und
Empfangen der Angabe, die es der UE (1200) ermöglicht, das eigenständige HARQ-ACK-NACK-Übertragungsschema zu verwenden, von der eNodeB in der Downlink-Steuerinformation, DCI, über den xPDCCH.

3. Vorrichtung nach Anspruch 1 oder 2, wobei die UE-Leistungsfähigkeitsinformationsnachricht angibt, dass die UE (1200) mindestens ein entspanntes HARQ-ACK-NACK-Übertragungsschema unterstützt,
wobei es das entspannte HARQ-ACK-NACK-Übertragungsschema der UE (1200) ermöglicht, eine HARQ-ACK-NACK-Rückkopplung für den xPDSCH gemäß einer vordefinierten oder konfigurierten HARQ-ACK-NACK-Verzögerung zu übertragen, und
wobei das entspannte HARQ-ACK-NACK-Übertragungsschema an der UE (1200) vordefiniert ist oder an der UE (1200) durch höhere Schichten über einen Master-Informationsblock, MIB, einen Systeminformationsblock, SIB, oder eine für die UE (1200) spezifische Funkressourcensteuerungssignalisierung, RRC-Signalisierung, konfiguriert ist.

4. Vorrichtung nach Anspruch 1, wobei:
die von der eNodeB empfangene Angabe in der Downlink-Steuerinformation, DCI, für eine Uplink-Zuteilung oder Downlink-Zuweisung auf dem xPDCCH enthalten ist oder die von der eNodeB empfangene Angabe ein Bitfeld ist, das das eigenständige HARQ-ACK-NACK-Übertragungsschema angibt.

5. Vorrichtung zur Verwendung in einer eNodeB, die betreibbar ist, um ein Hybrid Automatic Repeat Request, HARQ,-Acknowledgement, ACK,-Negative Acknowledgement, NACK-Übertragungsschema für eine Benutzereinrichtung, UE, (1200) zu konfigurieren, wobei die Vorrichtung einen oder mehrere Prozessoren (1202, 1204) und einen Speicher umfasst, die konfiguriert sind zum:
Verarbeiten, an der eNodeB, einer von der UE (1200) empfangenen UE-Leistungsfähigkeitsinformationsnachricht, wobei die UE-Leistungsfähigkeitsinformationsnachricht angibt, ob die UE (1200) ein eigenständiges HARQ-ACK-NACK-Übertragungsschema oder ein entspanntes HARQ-ACK-NACK-Übertragungsschema unterstützt;
Auswählen, an der eNodeB, von einem von dem eigenständigen HARQ-ACK-NACK-Übertragungsschema oder dem entspannten HARQ-ACK-NACK-Übertragungsschema zur Konfiguration an der UE (1200) basierend auf der UE-Leistungsfähigkeitsinformationsnachricht und eNodeB-Leistungsfähigkeiten und
Erzeugen, an der eNodeB, einer Angabe zur Übertragung an die UE (1200), die die UE (1200) zur Verwendung von einem von dem eigenständigen HARQ-ACK-NACK-Übertragungsschema oder dem entspannten HARQ-ACK-NACK-Übertragungsschema konfiguriert, wobei die Angabe in einer Downlink-Steuerinformation, DCI, über einen erweiterten physischen Downlink-Steuerkanal, xPDCCH, an die UE (1200) übertragen wird;
**dadurch gekennzeichnet, dass**
es das eigenständige HARQ-ACK-NACK-Übertragungsschema der eNodeB ermöglicht, Folgendes in einem Unterrahmen durchzuführen:
eine Modulation und Codierung für den xPDCCH und einen erweiterten physischen gemeinsam genutzten Downlink-Kanal, xPDSCH; und
einen Empfang einer HARQ-ACK-NACK-Rückkopplung für den xPDSCH über einen erweiterten physischen Uplink-Steuerkanal, xPUCCH.

6. Vorrichtung nach Anspruch 5, wobei die Angabe ein Bitfeld ist, das eines von dem eigenständigen HARQ-ACK-NACK-Übertragungsschema oder dem entspannten HARQ-ACK-NACK-Übertragungsschema angibt; oder
wobei die Angabe ein Bitfeld ist, das eine ausgewählte entspannte HARQ-ACK-NACK-Rückkopplungs-Zeitleiste aus einem Satz von festen HARQ-ACK-NACK-Rückkopplungs-Zeitleisten-Kandidaten angibt.

7. Vorrichtung nach Anspruch 5 oder 6, ferner konfiguriert zum:
Definieren eines Ressourcenindex für HARQ-ACK-NACK-Übertragungen über den xPUCCH oder einen erweiterten physischen Kanal Hybrid-ARQ-Indikatorkanal, xPHICH, um Ressourcenkollisionen an dem xPUCCH oder dem PHICH zu vermeiden,
wobei der Ressourcenindex in Abhängigkeit von mindestens einem von der Angabe des eigenständigen HARQ-ACK-NACK-Übertragungsschemas oder des entspannten HARQ-ACK-NACK-Übertragungsschemas und einem Satz von festen HARQ-ACK-NACK-Rückkopplungs-Zeitleisten-Kandidaten definiert ist.

8. Vorrichtung nach einem der Ansprüche 5 bis 7, ferner konfiguriert zum:
Verarbeiten einer von der UE (1200) empfangenen Anforderung, wobei die UE (1200) anfordert, das eigenständige HARQ-ACK-NACK-Übertragungsschema an der UE (1200) zu verwenden, wobei die Anforderung von der UE (1200) über einen erweiterten physischen Kanal mit wahlfreiem Zugriff, xPRACH, mit einer dedizierten Ressource empfangen wird,
wobei die dedizierte Ressource in dem xPRACH gemäß mindestens einem von Time Division Multiplexing, TDM, Frequency Division Multiplexing, FDM, oder Code Division Multiplexing, CDM, gemultiplext ist und
wobei die dedizierte Ressource durch höhere Schichten über einen Master-Informationsblock, MIB, einen Systeminformationsblock, SIB, oder eine Funkressourcensteuerungssignalisierung, RRC-Signalisierung, vordefiniert oder konfiguriert ist.

9. Vorrichtung nach Anspruch 8, ferner konfiguriert zum:
Verarbeiten einer von der UE (1200) empfangenen Anforderung, wobei die UE (1200) anfordert, das eigenständige HARQ-ACK-NACK-Übertragungsschema an der UE (1200) zu verwenden, wobei die Anforderung von der UE (1200) über eine Planungsanforderung, SR, mit einer dedizierten Ressource empfangen wird, wobei die dedizierte Ressource durch die eNodeB über die UE (1200)-dedizierte Funkressourcensteuerungssignalisierung, RRC-Signalisierung, konfiguriert wird.

10. Vorrichtung nach einem der Ansprüche 8 bis 9, ferner konfiguriert zum:
Verarbeiten einer von der UE (1200) empfangenen Anforderung, wobei die UE (1200) anfordert, das eigenständige HARQ-ACK-NACK-Übertragungsschema an der UE (1200) zu verwenden, wobei eine logische Kanal-Kennungs-ID in einer Mediumzugriffssteuerungsschicht, MAC-Schicht, definiert ist, um es der UE (1200) zu ermöglichen, die Verwendung des eigenständigen HARQ-ACK-NACK-Übertragungsschemas anzufordern.

11. Vorrichtung nach Anspruch 8, ferner konfiguriert zum:
Verarbeiten einer von der UE (1200) empfangenen Anforderung, wobei die UE (1200) anfordert, das entspannte HARQ-ACK-NACK-Übertragungsschema an der UE (1200) zu verwenden, wobei die Anforderung von der UE (1200) über einen erweiterten physischen Kanal mit wahlfreiem Zugriff, xPRACH, oder eine Planungsanforderung, SR, empfangen wird.

12. Vorrichtung nach Anspruch 8, ferner konfiguriert zum Definieren eines Demodulations-Referenzsignal-Musters, DM-RS-Musters, in dem ein orthogonaler Abdeckungscode, OCC, nur in einem Frequenzbereich angewandt wird, um es der UE (1200) zu ermöglichen, das eigenständige HARQ-ACK-NACK-Übertragungsschema zu implementieren.

13. Vorrichtung nach Anspruch 8, ferner konfiguriert zum Definieren eines Demodulations-Referenzsignal-Musters, DM-RS-Musters, in dem ein orthogonaler Abdeckungscode, OCC, nur in einem Zeitbereich angewandt wird, um es der UE (1200) zu ermöglichen, das entspannte HARQ-ACK-NACK-Übertragungsschema zu implementieren.

14. Vorrichtung nach einem der Ansprüche 8 bis 13, ferner konfiguriert zum:
Übertragen, in der DCI, eines Felds, das eine Art von orthogonalem Abdeckungscode, OCC, angibt, der in einem Demodulations-Referenzsignal-Muster, DM-RS-Muster, anzuwenden ist,
wobei das Feld angibt, dass ein erster OCC in einem Frequenzbereich anzuwenden ist, wenn das eigenständige HARQ-ACK-NACK-Übertragungsschema an der UE (1200) ausgelöst wird, oder das Feld angibt, dass ein zweiter OCC in einem Zeitbereich anzuwenden ist, wenn das entspannte HARQ-ACK-NACK-Übertragungsschema an der UE (1200) ausgelöst wird, und
wobei die DCI mindestens eines einschließt von: einem Feldindikator vom OCC-Typ und einem HARQ-Rückkopplungs-Modusindikator.

15. Mindestens ein maschinenlesbares Speichermedium, das Anweisungen speichert, die, wenn sie von einem Prozessor einer Benutzereinrichtung, UE, (1200) ausgeführt werden, die UE (1200) dazu veranlassen, Hybrid Automatic Repeat Request, HARQ,-Acknowledgement, ACK,-Negative Acknowledgement, NACK-Übertragungen durchzuführen durch:
Formatieren einer UE-Leistungsfähigkeitsinformationsnachricht zur Übertragung an eine eNodeB, wobei die UE-Leistungsfähigkeitsinformationsnachricht angibt, ob die UE (1200) ein eigenständiges HARQ-ACK-NACK-Übertragungsschema, das eine eigenständige Unterrahmenstruktur verwendet, oder ein entspanntes HARQ-ACK-NACK-Übertragungsschema unterstützt;
Erzeugen einer Anforderung zur Verwendung von einem von dem eigenständigen HARQ-ACK-NACK-Übertragungsschema oder dem entspannten HARQ-ACK-NACK-Übertragungsschema an der UE (1200);
Verarbeiten der Anforderung zur Übertragung an die eNodeB über einen erweiterten physischen Kanal mit wahlfreiem Zugriff, xPRACH, oder eine Planungsanforderung, SR; und
Verarbeiten einer von der eNodeB empfangenen Angabe, die die UE (1200) zur Verwendung von einem von dem eigenständigen HARQ-ACK-NACK-Übertragungsschema oder dem entspannten HARQ-ACK-NACK-Übertragungsschema konfiguriert, wobei die Angabe an der UE (1200) in einer Downlink-Steuerinformation, DCI, über einen erweiterten physischen Downlink-Steuerkanal, xPDCCH, empfangen wird;
**dadurch gekennzeichnet, dass**
das eigenständige HARQ-ACK-NACK-Übertragungsschema, das die eigenständige Unterrahmenstruktur verwendet, es der UE (1200) ermöglicht, Folgendes in einem Unterrahmen durchzuführen:
Demodulieren und Decodieren eines erweiterten physischen Downlink-Steuerkanals, xPDCCH, und eines erweiterten physischen gemeinsam genutzten Downlink-Kanals, xPDSCH; und
Formatieren zur Übertragung einer HARQ-ACK-NACK-Rückkopplung für den xPDSCH über einen erweiterten physischen Uplink-Steuerkanal, xPUCCH.

## Revendications

1. Appareil destiné à être utilisé dans un équipement utilisateur UE (1200), utilisable pour effectuer des transmissions de demande de répétition automatique hybride HARQ, d'accusé de réception ACK - accusé de réception négatif NACK, l'appareil comprenant un ou plusieurs processeurs (1202, 1204) et une mémoire configurés pour :
générer, au niveau de l'UE (1200), un message d'information de capacité UE pour transmission à un eNodeB, le message d'information de capacité UE indiquant que l'UE (1200) supporte un schéma de transmission d'ACK-NACK HARQ autonome qui utilise une structure de sous-trame autonome ;
signaler à un émetteur-récepteur (1206, 1208) au niveau de l'appareil d'envoyer une demande d'utilisation du schéma de transmission d'ACK-NACK HARQ ; et
traiter, au niveau de l'UE (1200), une indication reçue du eNodeB en réponse à la demande, où l'indication configure l'UE (1200) pour utiliser le schéma de transmission d'ACK-NACK HARQ autonome pour réaliser des transmissions d'ACK-NACK HARQ ;
**caractérisé en ce que**
le schéma de transmission d'ACK-NACK HARQ autonome qui utilise la structure de sous-trame autonome permet à l'UE (1200) d'effectuer ce qui suit dans une sous-trame :
une démodulation et un décodage pour un canal de commande de liaison descendante physique avancé, xPDCCH, et un canal partagé de liaison descendante physique avancé, xPDSCH ; et
une transmission de la rétroaction d'ACK-NACK HARQ pour le xPDSCH par l'intermédiaire d'un canal de commande de liaison montante physique avancé, xPUCCH.

2. Appareil selon la revendication 1, dans lequel l'émetteur-récepteur (1206, 1208) est en outre configuré pour :
transmettre, à partir de l'UE (1200), le message d'information de capacité UE au eNodeB ;
transmettre, de l'UE (1200) au eNodeB par l'intermédiaire d'un canal d'accès aléatoire physique avancé xPRACH, ou d'une demande de planification SR, la demande d'utilisation du schéma de transmission d'ACK-NACK HARQ autonome au niveau de l'UE (1200) ; et
recevoir, à partir du eNodeB dans des informations de commande de liaison descendante DCI, par l'intermédiaire du xPDCCH, l'indication qui permet à l'UE (1200) d'utiliser le schéma de transmission d'ACK-NACK HARQ autonome.

3. Appareil selon la revendication 1 ou 2, dans lequel le message d'information de capacité UE indique que l'UE (1200) supporte au moins un schéma de transmission d'ACK-NACK HARQ relaxé.
dans lequel le schéma de transmission d'ACK-NACK HARQ relaxé permet à l'UE (1200) de transmettre une rétroaction d'ACK-NACK HARQ pour le xPDSCH, conformément à un retard d'ACK-NACK HARQ prédéfini ou configuré, et
dans lequel le schéma de transmission d'ACK-NACK HARQ relaxé est prédéfini au niveau de l'UE (1200) ou configuré au niveau de l'UE (1200) par des couches supérieures par l'intermédiaire d'un bloc d'informations maître MIB, d'un bloc d'informations système SIB ou d'une signalisation de commande de ressources radio RRC spécifiques de l'UE (1200).

4. Appareil selon la revendication 1, dans lequel :
l'indication reçue du eNodeB est incluse à des informations de commande de liaison descendante DCI, pour une attribution de liaison montante ou une affectation de liaison descendante sur le xPDCCH ; ou
l'indication reçue du eNodeB est un champ de bits qui indique le schéma de transmission d'ACK-NACK HARQ autonome.

5. Appareil destiné à être utilisé dans un eNodeB utilisable pour configurer un schéma de transmission de demande de répétition automatique hybride HARQ, d'accusé de réception ACK - accusé de réception négatif NACK, pour un équipement d'utilisateur UE (1200), l'appareil comprenant un ou plusieurs processeurs (1202, 1204) et une mémoire configurés pour :
traiter, au niveau du eNodeB, un message d'information de capacité UE reçu de l'UE (1200), dans lequel le message d'information de capacité UE indique si l'UE (1200) supporte un schéma de transmission d'ACK-NACK HARQ autonome ou un schéma de transmission d'ACK-NACK HARQ relaxé ;
sélectionner, au niveau du eNodeB, l'un du schéma de transmission d'ACK-NACK HARQ autonome ou du schéma de transmission d'ACK-NACK HARQ relaxé pour la configuration au niveau de l'UE (1200) sur la base du message d'information de capacité UE et des capacités eNodeB ; et
générer, au niveau du eNodeB, une indication de transmission à l'UE (1200) qui configure l'UE (1200) pour utiliser l'un du schéma de transmission d'ACK-NACK HARQ autonome ou du schéma de transmission d'ACK-NACK HARQ relaxé, dans lequel l'indication est transmise à l'UE (1200) dans des informations de commande de liaison descendante DCI, par l'intermédiaire d'un canal de commande de liaison descendante physique avancé xPDCCH ;
**caractérisé en ce que**
le schéma de transmission d'ACK-NACK HARQ autonome permet au eNodeB d'effectuer ce qui suit dans une sous-trame :
une modulation et un codage pour le xPDCCH, et un canal partagé de liaison descendante physique avancé, XPDSCH ; et
une réception de la rétroaction d'ACK-NACK HARQ pour le xPDSCH par l'intermédiaire d'un canal de commande de liaison montante physique avancé, xPUCCH.

6. Appareil selon la revendication 5, dans lequel l'indication est un champ de bits qui indique l'un du schéma de transmission d'ACK-NACK HARQ autonome ou du schéma de transmission d'ACK-NACK HARQ relaxé ; ou dans lequel l'indication est un champ de bits qui indique un échéancier d'ACK-NACK HARQ sélectionné à partir d'un ensemble de candidats d'échéancier de rétroaction d'ACK-NACK HARQ fixes.

7. Appareil selon la revendication 5 ou 6, configuré en outre pour :
définir un indice de ressources pour les transmissions d'ACK-NACK HARQ par l'intermédiaire du xPUCCH, ou un canal indicateur ARQ hybride de canal physique avancé xPHICH, pour éviter des collisions de ressources au niveau du xPUCCH ou du PHICH,
dans lequel l'indice de ressources est défini comme une fonction d'au moins l'un de l'indication du schéma de transmission d'ACK-NACK HARQ autonome ou du schéma de transmission d'ACK-NACK HARQ relaxé et d'un ensemble de candidats d'échéancier de rétroaction d'ACK-NACK HARQ fixes.

8. Appareil selon l'une des revendications 5 à 7, configuré en outre pour :
traiter une demande reçue de l'UE (1200), où l'UE (1200) demande d'utiliser le schéma de transmission d'ACK-NACK HARQ autonome au niveau de l'UE (1200), dans lequel la demande est reçue de l'UE (1200) par l'intermédiaire d'un canal d'accès aléatoire physique avancé xPRACH, avec une ressource dédiée,
dans lequel la ressource dédiée xPRACH est multiplexée en accord avec au moins un multiplexage par répartition de temps TDM, un multiplexage par répartition de fréquence FDM, ou un multiplexage par répartition de code CDM, et
dans lequel la ressource dédiée est prédéfinie ou configurée par des couches supérieures par l'intermédiaire d'un bloc d'information maître MIB, d'un bloc d'information système SIB ou d'une signalisation de commande de ressources radio RRC.

9. Appareil selon la revendication 8, configuré en outre pour :
traiter une demande reçue de l'UE (1200), dans lequel l'UE (1200) demande d'utiliser le schéma de transmission d'ACK-NACK HARQ autonome au niveau de l'UE (1200), dans lequel la demande est reçue de l'UE (1200) par l'intermédiaire d'une demande de planification SR, avec une ressource dédiée,
dans lequel la ressource dédiée est configurée par le eNodeB par l'intermédiaire de la signalisation de commande de ressources radio RRC dédiée à l'UE (1200).

10. Appareil selon l'une quelconque des revendications 8 à 9, configuré en outre pour :
traiter une demande reçue de l'UE (1200), dans lequel l'UE (1200) demande d'utiliser le schéma de transmission d'ACK-NACK HARQ autonome au niveau de l'UE (1200), dans lequel un identifiant ID de canal logique, dans une couche de commande d'accès au support MAC, est défini pour permettre à l'UE (1200) de demander l'utilisation du schéma de transmission d'ACK-NACK HARQ autonome.

11. Appareil selon la revendication 8, configuré en outre pour :
traiter une demande reçue de l'UE (1200), dans lequel l'UE (1200) demande d'utiliser le schéma de transmission d'ACK-NACK HARQ relaxé au niveau de l'UE (1200), dans lequel la demande est reçue de l'UE (1200) par l'intermédiaire d'un canal d'accès aléatoire physique avancé xPRACH, ou une demande de planification SR.

12. Appareil selon la revendication 8, configuré en outre pour définir un modèle de signal de référence de démodulation DM-RS, dans lequel un code de couverture orthogonal OCC est appliqué uniquement dans un domaine fréquentiel pour permettre à l'UE (1200) de mettre en œuvre le schéma de transmission d'ACK-NACK HARQ autonome.

13. Appareil selon la revendication 8, configuré en outre pour définir un modèle de signal de référence de démodulation IDM-RS, dans lequel un code de couverture orthogonal OCC est appliqué uniquement dans un domaine temporel pour permettre à l'UE (1200) de mettre en oeuvre le schéma de transmission d'ACK-NACK HARQ relaxé.

14. Appareil selon l'une quelconque des revendications 8 à 13, configuré en outre pour :
transmettre, dans le DCI, un champ qui indique un type de code de couverture orthogonal OCC, à appliquer dans un motif de signal de référence de démodulation DM-RS,
dans lequel le champ indique qu'un premier OCC doit être appliqué dans un domaine fréquentiel lorsque le schéma de transmission d'ACK-NACK HARQ autonome est déclenché au niveau de l'UE (1200) ou le champ indique qu'un deuxième OCC doit être appliqué dans un domaine temporel lorsque le schéma de transmission d'ACK-NACK HARQ relaxé est déclenché au niveau de l'UE (1200), et
dans lequel le DCI comprend au moins un élément parmi : un indicateur de champ de type OCC et un indicateur de mode de rétroaction de HARQ.

15. Au moins un support de stockage lisible par machine stockant des instructions qui, lorsqu'elles sont exécutées par un processeur d'un équipement utilisateur, UE (1200), amènent l'UE (1200) à effectuer des transmissions de demande de répétition automatique hybride HARQ, d'accusé de réception ACK - d'accusé de réception négatif NACK, par :
le formatage d'un message d'information de capacité UE pour transmission à un eNodeB, le message d'information de capacité UE indiquant si l'UE (1200) supporte un schéma de transmission d'ACK-NACK HARQ autonome qui utilise une structure de sous-trame autonome ou un schéma de transmission d'ACK-NACK HARQ relaxé ;
la génération d'une demande d'utilisation de l'un du schéma de transmission d'ACK-NACK HARQ autonome ou du schéma de transmission d'ACK-NACK HARQ relaxé au niveau de l'UE (1200) ;
Le traitement de la demande de transmission au eNodeB par l'intermédiaire d'un canal d'accès aléatoire physique avancé xPRACH, ou d'une demande de planification SR ; et
le traitement d'une indication reçue du eNodeB qui configure l'UE (1200) pour utiliser l'un du schéma de transmission d'ACK-NACK HARQ autonome ou du schéma de transmission d'ACK-NACK HARQ relaxé, dans lequel l'indication est reçue au niveau de l'UE (1200) dans des informations de commande de liaison descendante DCI, par l'intermédiaire d'un canal de commande de liaison descendante physique avancé xPDCCH ;
**caractérisé en ce que**
Le schéma de transmission d'ACK NACK HARQ autonome qui utilise la structure de sous-trame autonome permet à l'UE (1200) d'effectuer ce qui suit dans une sous-trame :
la démodulation et le décodage d'un canal de commande de liaison descendante physique avancé, xPDCCH, et d'un canal partagé de liaison descendante physique avancé, xPDSCH ; et le formatage pour une rétroaction d'ACK-NACK HARQ de transmission pour le xPDSCH par l'intermédiaire d'un canal de commande de liaison montante physique avancé, xPUCCH.
